# EUROPÄISCHE PATENTSCHRIFT

(11) **EP 3 384 089 B1**
(45) Veröffentlichungstag und Bekanntmachung des Hinweises auf die Patenterteilung: **16.10.2019**
(21) Anmeldenummer: 17709568.4
(22) Anmeldetag: 20.02.2017
(51) Int. Cl.: E01B 2/00, E01B 7/02, E01B 25/12, E01B 25/28, B61J 1/08, B60L 13/00, E01B 25/34

(54) **WECHSELWEICHE SOWIE SCHIENENNETZ MIT MINDESTENS EINER SOLCHEN WECHSELWEICHE**
POINT SWITCH, AND RAILWAY NETWORK COMPRISING AT LEAST ONE POINT SWITCH OF SAID TYPE
MÉCANISME DE CHANGEMENT DE VOIE ET RÉSEAU FERROVIAIRE COMPRENANT AU MOINS UN TEL MÉCANISME DE CHANGEMENT DE VOIE

(30) Priorität: 22.02.2016 CH 2332016
(43) Veröffentlichungstag der Anmeldung: 10.10.2018
(73) Patentinhaber: Swiss Transportation Research Institute AG, 8700 Küsnacht (CH)
(72) Erfinder: BAHMAN, Ramon Alexander, 8700 Küsnacht (CH); BAHMAN, Aurelius Christian, 8700 Küsnacht (CH); BAHMAN, Severin Alexis, 8700 Küsnacht (CH)
(74) Vertreter: Schalch, Rainer
(86) Internationale Anmeldenummer: PCT/CH2017/000016
(87) Internationale Veröffentlichungsnummer: WO 2017/143463

(56) Entgegenhaltungen:
- WO-A1-00/34100
- WO-A1-01/44577
- WO-A1-2008/061728
- US-A1- 2011 271 867

## Beschreibung

### Gebiet der Erfindung

Die Erfindung betrifft eine Wechselweiche sowie ein Schienennetz mit mindestens einer solchen Wechselweiche.

### Hintergrund

Wechselweichen, bei denen eine Platte mit einem starren geraden Fahrstrang durch Verschieben oder Drehen gegen eine Platte mit einem starren gekrümmten Fahrstrang ausgetauscht wird, sind bekannt. US 2011/0271867 A1 zeigt ein Beispiel sowohl für eine verschiebbare als auch für eine drehbare Wechselweiche.

### Darstellung der Erfindung

Der Erfindung liegt die Aufgabe zu Grunde, eine verbesserte Wechselweiche zu schaffen.

Diese Aufgabe wird mit einer Wechselweiche mit den Merkmalen des Anspruchs 1 gelöst.

Die Wechselweiche ist somit so ausgeführt, dass die die Fahrstränge tragenden Weichenplatten der Wechselweiche vertikal übereinander angeordnet sind und dass die Weichenstellung durch vertikale Verschiebung der Weichenplatten erfolgt. Es zeigt sich, dass damit insbesondere eine Wechselweiche geschaffen wird, welche seitlich eines Fahrstranges wenig Platz in Anspruch nimmt und dennoch die Vorteile einer Wechselweiche bietet, die starre Fahrstränge aufweist und daher mit hoher Geschwindigkeit befahrbar ist. Die Weichenplatten sind im Wesentlichen plattenförmige Bauteile, welche den jeweiligen Fahrstrang aufnehmen und tragen. Mit dem Begriff "Fahrstrang" ist jede Art von Schiene oder von Schienenpaar gemeint, die von einem spurgebundenen, an die Schiene oder an das Schienenpaar angepassten Fahrzeug befahrbar ist. Es kann sich um ein konventionelles Schienenpaar mit beliebiger Spurweite handeln oder um eine Einzelschiene, die vom Fahrzeug umgriffen wird.

Bevorzugt weist mindestens eine der Weichenplatten einen gekrümmt verlaufenden Fahrstrang auf, der im Wesentlichen klothoidenförmig gekrümmt ist. Damit kann die Befahrbarkeit der Wechselweiche mit hoher Geschwindigkeit verbessert werden. Bevorzugt ist weiter die Wechselweiche so ausgeführt, dass für die vertikale Verschiebung der Weichenplatten eine Vielzahl entlang der Weichenplattenaussenseiten angeordnete Mittel zum Heben und Senken der Weichenplatten angeordnet sind. Dies erlaubt das vertikale Verschieben der Weichenplatten auch für grosse Weichendimensionen, wie sie für die Befahrbarkeit mit hoher Geschwindigkeit wünschbar sind. Ferner ist es bevorzugt, dass die Wechselweiche entlang der Weichenplattenaussenseiten eine Vielzahl von Führungsmitteln zur Führung der Vertikalbewegung der Weichenplatten.

Der Erfindung liegt weiter die Aufgabe zu Grunde ein Schienennetz zu schaffen, dass die platzsparende Anordnung von Weichen erlaubt und für hohe Geschwindigkeiten geeignet ist.

Diese Aufgabe wird mit einem Schienennetz gemäss Anspruch 7 gelöst
Es ergeben sich die im Zusammenhang mit der Wechselweiche genannten Vorteile.

Es kann sich um ein Schienennetz handeln, dessen Fahrstränge überwiegend unterirdisch angeordnet sind. Bei einem solchen Schienennetz ist es besonders vorteilhaft, wenn eine Wechselweiche seitlich platzsparend angeordnet werden kann.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 schematisch eine Draufsicht auf eine Wechselweiche;
Figur 2 schematisch eine Längsschnittansicht eines Ausführungsbeispiels einer Wechselweiche gemäss der Erfindung;
Figur 3 schematisch eine Querschnittansicht der Wechselweiche in deren Stellung gemäss Figur 2; und
Figur 4 schematisch eine Querschnittsansicht der Wechselweiche gemäss Figur 3 aber mit der Stellung der Weiche für die andere Weichenstellung.

### Weg(e) zur Ausführung der Erfindung

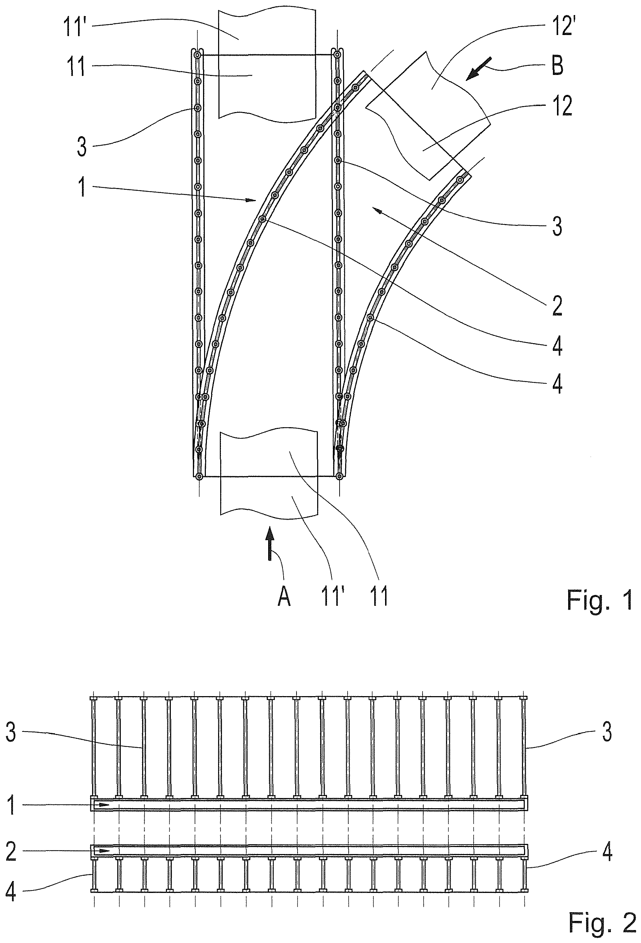

Die Figuren 1 bis 4 zeigen schematisch ein Ausführungsbeispiel einer Wechselweiche gemäss der Erfindung. In Figur 1 ist eine erste Weichenplatte 1 der Wechselweiche dargestellt, welche einen nur teilweise gezeigten und auch nur angedeuteten Fahrstrang 11 für ein spurgebundenes Fahrzeug bereitstellt. Dieser Fahrstrang 11 verläuft gerade und setzt somit einen ausserhalb der Weiche verlaufenden geraden Fahrstrang 11', der ebenfalls nur angedeutet ist, in dessen gerade verlaufenden Richtung fort. Unterhalb der Weichenplatte 1 ist eine weitere Weichenplatte 2 angeordnet, wobei in der Figur 1 die obere Weichenplatte 1 "durchsichtig" dargestellt ist, so dass die unterhalb der Weichenplatte 1 liegende Weichenplatte 2 ersichtlich ist. Auf der Weichenplatte 2 befindet sich ein Fahrstrang 12 für das spurgebundene Fahrzeug, welcher ebenfalls nur teilweise dargestellt und nur angedeutet ist. Die Weichenplatte 2 trägt in diesem Fall einen gekrümmt verlaufenden Fahrstrang 12, der den Fahrstrang 11' verlässt bzw. in diesen mündet und sich ausserhalb der Weichenplatte 2 als nur angedeuteter Fahrstrang 12' fortsetzt. Die Weichenplatte 2, welche den gekrümmten Fahrstrang trägt, ist insbesondere in Draufsicht ebenfalls mit gekrümmter Form ausgebildet.

Der Begriff "unterhalb" bzw. "oberhalb" bedeutet, dass die entsprechenden Elemente in Vertikalrichtung übereinander liegen, wobei in diesem Beispiel die Weichenplatte 1 jeweils oberhalb der Weichenplatte 2 liegt. Dies könnte auch umgekehrt sein. Mit dem Begriff "Fahrstrang" ist jede Art von Schiene oder von Schienenpaar gemeint, die von einem spurgebundenen, an die Schiene oder an das Schienenpaar angepassten Fahrzeug befahrbar ist. Es kann sich um ein konventionelles Schienenpaar mit beliebiger Spurweite handeln oder um eine Einzelschiene, die vom Fahrzeug umgriffen wird. Anstelle der angedeuteten Fahrstränge, die auf der jeweiligen Weichenplatte verlaufen, sind auch Fahrstränge umfasst, die an der Unterseite der Weichenplatte angeordnet sind, so dass das Fahrzeug an dem Fahrstrang hängend angeordnet ist. Ein Fahrzeug, welches für den Fahrstrang vorgesehen ist, kann ein beliebiges spurgebundenes Fahrzeug sein, also ein Eisenbahnfahrzeug, ein Strassenbahnfahrzeug, ein Standseilbahnfahrzeug, eine Einschienenbahn oder ein anderes spurgebundenes Fahrzeug und die Wechselweiche gemäss der Erfindung kann für alle diese Fahrzeuge bzw. deren Fahrstränge bereitgestellt werden, bzw. das die Wechselweiche enthaltende Schienennetz kann auf die oben erwähnte Weise ausgestaltet sein und für die genannten Fahrzeuge bereitgestellt sein. Der Begriff Weichenplatte wird bei der vorliegenden Erfindung für ein beliebiges im Wesentlichen plattenförmiges Bauteil verwendet, das die Schiene oder die Schienen trägt. Dieses Bauteil kann auf beliebige Art gebildet werden.

Die Figuren 2 bis 4 zeigen jeweils eine stark vereinfachte Längsschnittansicht bzw. Querschnittansicht eines Ausführungsbeispiels einer Wechselweiche gemäss der Erfindung. Dies kann insbesondere eine Wechselweiche gemäss Figur 1 sein und es werden dieselben Bezugszeichen wie in Figur 1 für funktionsgleiche oder funktionsähnliche Teile verwendet.

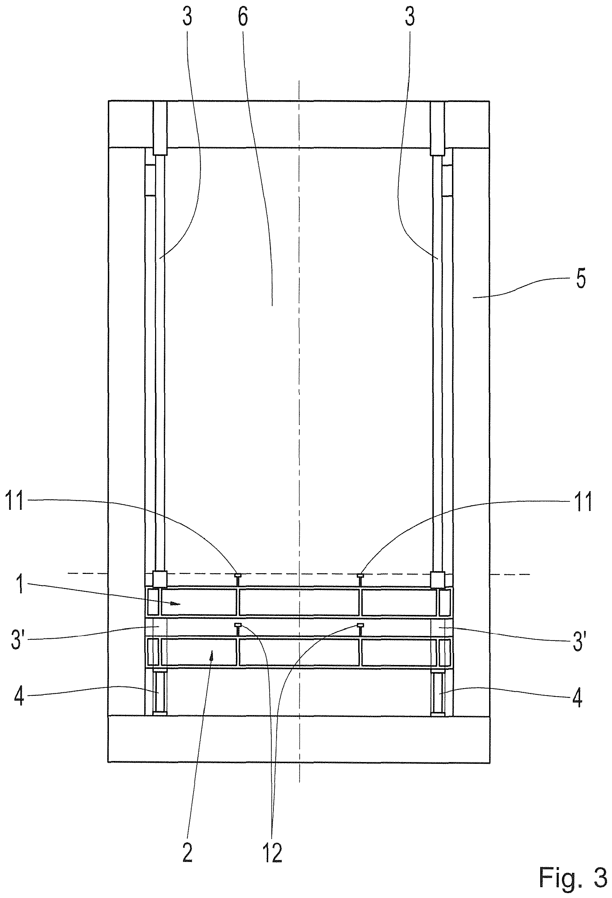

Die Figuren 2 und 3 zeigen die Wechselweiche in einer ersten Weichenposition, bei welcher die horizontal liegende Weichenplatte 1 in einer Höhe angeordnet ist bzw. eine vertikale Position hat, in welcher der auf der Weichenplatte 1 angeordnete Fahrstrang 11 mit dem Fahrstrang 11' des Schienennetzes ausserhalb der Wechselweiche fluchtend angeordnet ist. Ein auf dem Schienennetz auf dem Fahrstrang 11' in Richtung des Pfeils A oder in Gegenrichtung zum Pfeil A fahrendes Fahrzeug wird somit auf dem Fahrstrang 11 auf der Weichenplatte 1 geführt und befindet sich beim Befahren der Wechselweiche im Raum 6 direkt oberhalb der Weichenplatte 1. In diesem Beispiel ist der auf der Weichenplatte 1 angeordnete Fahrstrang ein gerade verlaufender Fahrstrang 11, so dass das Fahrzeug die Wechselweiche in gerade verlaufender Fahrtrichtung passiert. In Figur 2 und Figur 3 ist ersichtlich, dass die Weichenplatte 2 in dieser Stellung der Wechselweiche unterhalb der Weichenplatte 1 angeordnet ist, so dass der Fahrstrang 12 der Weichenplatte 2 ausser Funktion ist.

Wird die Wechselweiche betätigt, um die andere Weichenstellung bereitzustellen, so wird die Weichenplatte 1 vertikal angehoben und auch die Weichenplatte 2 wird vertikal angehoben.

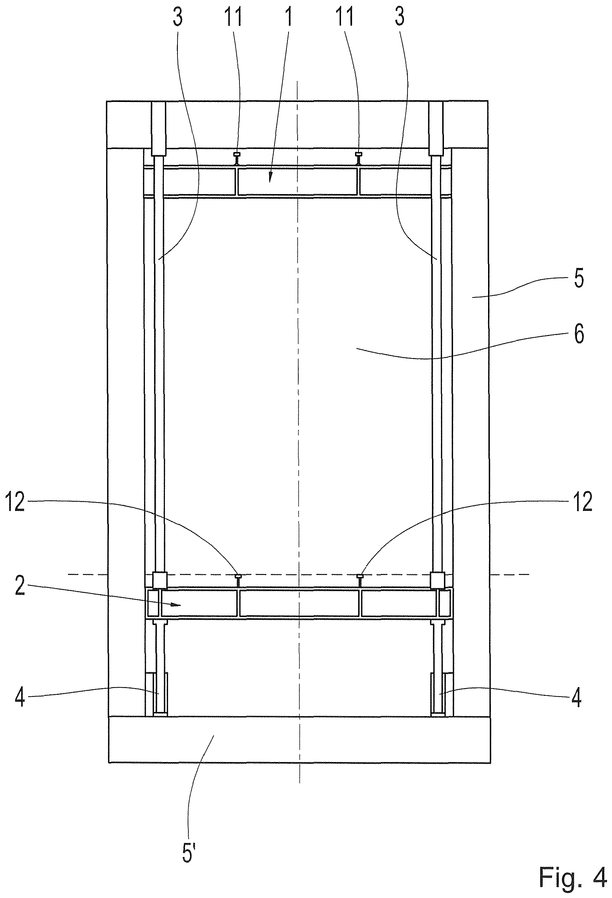

Die Weichenplatte 2 wird um eine solche Distanz angehoben, dass bei Beendigung der Hebebewegung die horizontal liegende Weichenplatte 2 in einer Höhe angeordnet ist bzw. eine vertikale Position hat, in welcher der auf der Weichenplatte 2 angeordnete Fahrstrang 12 einerseits mit dem Fahrstrang 11' des Schienennetzes und andererseits mit dem Fahrstrang 12' des Schienennetzes fluchtend angeordnet ist. Ein auf dem Schienennetz auf dem Fahrstrang 11' in Richtung des Pfeils A fahrendes Fahrzeug wird somit auf dem Fahrstrang 12 auf der Weichenplatte 2 spurgeführt und befindet sich beim Befahren der Wechselweiche im Raum 6 direkt oberhalb der Weichenplatte 2. In diesem Beispiel ist der auf der Weichenplatte 2 angeordnete Fahrstrang ein gekrümmt verlaufender Fahrstrang 12, so dass das Fahrzeug die Wechselweiche in gekrümmt verlaufender Fahrtrichtung passiert. In Figur 2 und Figur 4 ist ersichtlich, dass die Weichenplatte 1 in dieser Stellung der Wechselweiche soweit vertikal nach oben angehoben bzw. verfahren worden ist, dass sie unter Freihaltung des vom Fahrzeug zu befahrenden Raums 6 oberhalb der Weichenplatte 2 angeordnet ist. Der Fahrstrang 11 der Weichenplatte 1 ist in dieser Stellung ausser Funktion. Dieselbe Situation trifft zu, wenn ein Fahrzeug das Schienennetz mit der Wechselweiche so befährt, dass es vom Fahrstrang 12' in Richtung B her kommend die zweite Weichenplatte mit dem Fahrstrang 12 befährt und in den Fahrstrang 11' ausserhalb der Wechselweiche geführt wird.

Der gekrümmte Fahrstrangabschnitt ist als Übergangsbogen vorzugsweise im Wesentlichen klothoidenförmig ausgeführt, was bei herkömmlichen Weichen grundsätzlich für deren Befahrbarkeit mit hoher Geschwindigkeit bei gutem Komfort bekannt ist.

Die Weichenplatte 1 ist in der Weichenstellung der Figuren 2 und 3 durch Mittel 3 und allenfalls auch Mittel 5 positioniert und derart starr gehalten, dass sie die Weichenfunktion erfüllen kann und für das Befahren durch das Fahrzeug stabil ist. Die Weichenplatte 2 ist in der Weichenstellung der Figuren 2 und 4 durch Mittel 4 und allenfalls auch Mittel 5 positioniert und derart starr gehalten, dass sie die Weichenfunktion erfüllen kann und für das Befahren durch das Fahrzeug stabil ist. Dies kann auch für hohe Geschwindigkeiten des Fahrzeugs durch entsprechende Ausgestaltung der Mittel 3 bzw. 4 und allenfalls 5 gewährleistet werden. Die Weichenplatten 1 und 2 sind jeweils als starrer, im Wesentlichen plattenförmiger Körper ausgeführt und können aus einer Eisenkonstruktion oder einer Eisenbetonkonstruktion oder auf andere Weise gebildet sein. Die Weichenplatte kann als gitterartiges Bauteil ausgeführt sein. Wesentlich ist, dass die jeweilige Weichenplatte zur Aufnahme des Fahrstranges geeignet ist und ein plattenartiges Bauteil genügender Festigkeit darstellt, damit dieses von den auf dem Schienennetz verkehrenden Fahrzeugen befahren werden kann.

In dem gezeigten Beispiel werden die Mittel 3 durch eine Vielzahl von beidseits seitlich der Weichenplatte 1 angeordnete Führungen gebildet. Diese Mittel beinhalten in dem Beispiel zugleich auch die Antriebsmittel, um die Weichenplatte 1 vertikal zu verfahren. Dabei können in einzelnen Führungsmitteln 3 sowohl die Führungsfunktion als auch der Antrieb zum Heben und Senken der Weichenplatte 1 kombiniert sein. Die Mittel 3 können aber auch so ausgestaltet sein, dass ein Teil der Mittel 3 lediglich der Führung bei der Verschiebung der Weichenplatte dient und andere der Mittel 3 das Heben und Senken bewirken. Die Mittel 3 umfassen vorzugsweise auch Stützen 3', die sich auf dem festen Untergrund 5' abstützen und die eine Auflage für die Weichenplatte bilden. Die Mittel zum Heben und Senken werden dann nur für diese Funktion verwendet und in der Position, in welcher die Weichenplatte befahrbar ist, wird sie von den Stützen in der Position gehalten, so dass die Hebe- und Senkmittel in dieser Position ganz oder teilweise entlastet sind.

Zusätzlich zu den dargestellten Mitteln 3 für die Führung und das Heben und Senken können auch Führungs- und/oder lösbare Befestigungsmittel vorgesehen sein, welche die jeweilige Weichenplatte in ihrer Stellung, in welcher sie vom Fahrzeug befahren wird, seitlich in einer Tragkonstruktion 5 führt und/oder dort in der Weichenstellung, in der die Weichenplatte befahren wird, lösbar festhält.

Die Mittel 3 können von säulenartigen Mitteln gebildet sein, entlang welcher die Weichenplatte 1 um einen solchen Betrag vertikal verfahrbar ist, dass die Weichenplatte 1 einerseits bei der Weichenstellung von Figur 3 in der zu befahrenden Position ist und andererseits bei der Weichenstellung von Figur 4 in einer Position oberhalb des Raums 6 positioniert ist, um den Raum 6 für das Befahren durch das Fahrzeug freizugeben, das dann auf der Weichenplatte 2 fährt.

Der Antrieb für das Verfahren der Weichenplatten kann auf beliebige Weise ausgeführt sein. Einerseits kann ein Teil der säulenartigen Mittel 3 als Gewindespindeln ausgebildet sein. An der Weichenplatte 1 sind in diesem Fall Aufnahmen mit Innengewinde vorgesehen, in welchen die Gewindespindeln zu liegen kommen. Durch relative Drehung der Gewindespindeln und der Aufnahmen kann ein vertikales Verfahren nach oben bzw. nach unten (mit Bezug auf oben und unten insbesondere in den Figuren 3 und 4) bewirkt werden. Die nicht als Gewindespindeln ausgeführten säulenartigen Mittel 3 dienen als Führungen, indem in der Weichenplatte 1 entsprechende Führungsmittel vorgesehen sind, welche die säulenartigen Mittel 3 mindestens teilweise umgreifen. Auch in diesem Fall kann die Weichenplatte 1 in der befahrbaren Position auf Stützen 3' aufliegen.

Die Mittel zum Heben und Senken können andererseits bevorzugt auch als seilförmige Mittel ausgestaltet sein. Diese können einen Teil der säulenförmigen Mittel 3 bilden, während die anderen säulenförmigen Mittel 3 weiterhin als Führungen ausgebildet sind. Allenfalls sind auch alle Mittel 3 seilförmig ausgebildet und es sind zusätzliche Führungen vorgesehen. Die seilförmigen Mittel zum Heben beziehungsweise Senken der Weichenplatte 1 können durch angetriebene Seiltrommeln entsprechend verkürzt (Heben) bzw. wieder verlängert (Senken) werden. Bevorzugt sind solche seilförmigen Hebemittel bzw. Senkmittel mit den genannten Stützen 3' kombiniert, auf welchen die Weichenplatte 1 aufliegt, wenn sie in der befahrbaren Position von Figur 1

Das Verfahren der Weichenplatte 2, und bevorzugt auch deren Führung, kann durch die säulenartigen Mittel 4 bewirkt werden. Es können auch bei der Weichenplatte 2 nicht dargestellte Mittel vorhanden sein, die seitlich der Weichenplatte 2 mit der Tragkonstruktion 5 zusammenwirken. Die säulenartigen Mittel 4 müssen bei der dargestellten Ausführungsform einen geringeren vertikalen Verfahrweg für die Weichenplatte 2 bereitstellen, als dies für die Weichenplatte 1 benötigt wird. Es ist lediglich das Verfahren der Weichenplatte 2 aus der Stellung der Figur 3 in die Stellung der Figur 4 und wieder zurück benötigt. Die säulenartigen Mittel 4 können zum Beispiel hydraulische Hebemittel sein. Ein Teil der Vielzahl der Mittel kann als angetriebene Hebemittel und Senkmittel dienen und ein anderer Teil der Mittel 4 kann lediglich als Führungsmittel für die Weichenplatte 2 beim Heben und Senken dienen. Auch die Weichenplatte 2 kann durch seilförmige Hebe- und Senkmittel angehoben bzw. abgesenkt werden. Auch für die Weichenplatte 2 können Stützen vorgesehen sein, über welche die Weichenplatte 2 in der Position, in welcher sie befahren wird, gegen den Untergrund 5' abgestützt ist, so dass die Mittel zum Heben und Senken vollständig oder teilweise entlastet sind, wenn die Weichenplatte 2 mit dem darauf befindlichen Fahrstrang 12 befahren wird.

Der Antrieb der Mittel 3 und 4 kann vom Fachmann auf verschiedene Weise ausgestaltet sein und kann insbesondere jeweils ein elektromotorischer und/oder hydraulischer und/oder pneumatischer Antrieb sein.

Falls die die Weiche befahrenden Fahrzeuge über die Schiene oder die Schienen mit Fahrstrom gespiesen werden, können Mittel vorgesehen werden, mit denen der Fahrstrom zwischen den Fahrsträngen umgeschaltet wird, um den jeweils nicht benötigten Fahrstrang stromlos zu schalten. Es können aber auch beide Fahrstränge dauernd mit Strom versorgt werden. Falls die Fahrzeuge über eine Oberleitung mit Fahrstrom versorgt werden, ist diese jeweils mit der Weichenplatte zu verschieben. An der oberen Weichenplatte kann allenfalls die Oberleitung für die den unteren Fahrstrang angeordnet sein. Ausgestaltungen für die Oberleitungen kann der Fachmann mit seinem üblichen Fachwissen bereitstellen und dies wird hier nicht weiter erläutert.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Wechselweiche mit mindestens einer ersten Weichenplatte (1), die einen ersten starren von einem spurgebundenen Fahrzeug befahrbaren Fahrstrang (11) trägt, und mindestens einer zweiten Weichenplatte (2), die einen zweiten starren von dem spurgebundenen Fahrzeug befahrbaren Fahrstrang (12) trägt, wobei eine Weichenstellung durch Verschiebung der Weichenplatten bewirkbar ist,
**dadurch gekennzeichnet, dass** die Weichenplatten (1, 2) vertikal übereinanderliegend angeordnet sind und dass die Weichenstellung durch vertikale Verschiebung der Weichenplatten bewirkbar ist.

2. Wechselweiche nach Anspruch 1, **dadurch gekennzeichnet, dass** mindestens eine der Weichenplatten (2) einen gekrümmt verlaufenden Fahrstrang (12) aufweist, der im Wesentlichen klothoidenförmig gekrümmt ist.

3. Wechselweiche nach Anspruch 1 oder 2, **dadurch gekennzeichnet, dass** für die vertikale Verschiebung der Weichenplatten eine Vielzahl entlang der Weichenplattenaussenseiten angeordnete Mittel (3; 4) zum Heben und Senken der Weichenplatten angeordnet sind.

4. Wechselweiche nach einem der Ansprüche 1 bis 3, **dadurch gekennzeichnet, dass** entlang der Weichenplattenaussenseiten eine Vielzahl von Führungsmitteln (3, 4, 5) zur Führung der Vertikalbewegung der Weichenplatten vorgesehen sind.

5. Wechselweiche nach einem der Ansprüche 1 bis 4, **dadurch gekennzeichnet, dass** die jeweilige Weichenplatte (1; 2) in ihrer befahrbaren Position auf Stützen gegenüber dem Untergrund (5') abgestützt ist.

6. Wechselweiche nach einem der Ansprüche 1 bis 5, **dadurch gekennzeichnet, dass** die Fahrstränge (11, 12) jeweils eine Einzelschiene umfassen oder jeweils ein Schienenpaar mit voneinander beabstandet parallel verlaufenden Schienen umfassen.

7. Schienennetz mit mindestens einer Wechselweiche nach einem der Ansprüche 1 bis 6.

8. Schienennetz nach Anspruch 7, **dadurch gekennzeichnet, dass** das Schienennetz weitere außerhalb der Wechselweiche angeordnete Fahrstränge (11', 12') aufweist, welche im Einbauzustand überwiegend unterirdisch angeordnet sind.

## Claims

1. Point switch comprising at least one first switch plate (1), which bears a first rigid track portion (11) on which a track-bound vehicle can travel, and at least one second switch plate (2), which bears a second rigid track portion (12) on which the track-bound vehicle can travel, it being possible to effect a switch position by moving the switch plates, **characterized in that** the switch plates (1, 2) are arranged vertically above one another, and **in that** the switch position is effected by vertically moving the switch plates.

2. Point switch according to claim 1, **characterized in that** at least one of the switch plates (2) has a curved track portion (12) which is curved in a substantially clothoidal manner.

3. Point switch according to either claim 1 or claim 2, **characterized in that**, in order to vertically move the switch plates, a plurality of means (3; 4) for raising and lowering the switch plates are arranged along the outer sides of the switch plate.

4. Point switch according to any of claims 1 to 3, **characterized in that** a plurality of guide means (3, 4, 5) for guiding the vertical movement of the switch plates are provided along the outer sides of the switch plates.

5. Point switch according to any of claims 1 to 4, **characterized in that**, when the relevant switch plate (1, 2) is in the position in which it can be travelled on, said plate is supported on supports with respect to the ground (5').

6. Point switch according to any of claims 1 to 5, **characterized in that** the track portions (11, 12) each comprise a single rail or each comprise a pair of rails having parallel rails spaced apart from one another.

7. Rail network comprising at least one point switch according to any of claims 1 to 6.

8. Rail network according to claim 7, **characterized in that** the rail network has further track portions (11', 12') arranged outside the point switch, which track portions are arranged predominantly underground in the installed state.

## Revendications

1. Aiguillage variable comportant au moins une première plaque d'aiguillage (1) qui porte une première voie (11) rigide pouvant être parcourue par un véhicule sur rails, et au moins une seconde plaque d'aiguillage (2) qui porte une seconde voie (12) rigide pouvant être parcourue par le véhicule sur rails, une position d'aiguillage pouvant être obtenue par le déplacement des plaques d'aiguillage, **caractérisé en ce que** les plaques d'aiguillage (1, 2) sont disposées verticalement les unes sur les autres et **en ce que** la position d'aiguillage peut être obtenue par le déplacement vertical des plaques d'aiguillage.

2. Aiguillage variable selon la revendication 1, **caractérisé en ce qu'**au moins l'une des plaques d'aiguillage (2) présente une voie (12) incurvée qui est sensiblement incurvée sous la forme d'un clothoïde.

3. Aiguillage variable selon la revendication 1 ou 2, **caractérisé en ce que**, pour le déplacement vertical des plaques d'aiguillage, une pluralité de moyens (3 ; 4) disposés le long des côtés extérieurs des plaques d'aiguillage pour lever et abaisser les plaques d'aiguillage sont disposés.

4. Aiguillage variable selon l'une des revendications 1 à 3, **caractérisé en ce qu'**une pluralité de moyens de guidage (3, 4, 5) destinés à guider le mouvement vertical des plaques d'aiguillage sont prévus le long des côtés extérieurs des plaques d'aiguillage.

5. Aiguillage variable selon l'une des revendications 1 à 4, **caractérisé en ce que** chaque plaque d'aiguillage (1 ; 2) est supportée dans sa position de parcours sur des supports par rapport au sol (5').

6. Aiguillage variable selon l'une des revendications 1 à 5, **caractérisé en ce que** les voies (11, 12) comprennent chacune un monorail ou comprennent chacune une paire de rails comportant des rails espacés de manière parallèle.

7. Réseau ferroviaire comportant au moins un aiguillage variable selon l'une des revendications 1 à 6.

8. Réseau ferroviaire selon la revendication 7, **caractérisé en ce que** le réseau ferroviaire présente d'autres voies (11', 12') qui sont disposées à l'extérieur de l'aiguillage variable, lesquelles voies sont principalement enterrées dans le sol à l'état monté.
